# EUROPÄISCHE PATENTANMELDUNG

(11) **EP 1 002 838 A1**
(43) Veröffentlichungstag der Anmeldung: **24.05.2000**
(21) Anmeldenummer: 98121475.2
(22) Anmeldetag: 11.11.1998
(51) Int. Cl.: C09D 5/34, C09K 3/10

(54) **Paste zur wasserdichten Beschichtung**

(71) Anmelder: Lafarge Braas Roofing Accessories GmbH & Co. KG., 61437 Oberursel (DE)
(72) Erfinder: Dützmann, Till Dr., 69509 Mörlenbach (DE); Neuschäfer, Michael Dipl.-Ing., 65385 Rüdersheim (DE); Willen, Günther, 65366 Geisenheim (DE)
(74) Vertreter: Brüning, Rolf Dr.

(57) **Zusammenfassung**

Die Erfindung betrifft eine Paste zur wasserdichten Beschichtung von Oberflächen, wobei die Paste zumindest in einem Lösungsmittel gelöstes thermoplastisches Material aufweist. Um eine Paste zu schaffen, die auf sehr rauhe und perforierte Oberflächen wie Gitter auftragbar ist und dabei Durchbrüche bzw. Löcher von bis zu mehreren Millimetern filmbildend witterungsbeständig überdeckt, wird vorgeschlagen, daß die Paste zusätzlich Fasern enthält und daß der Thermoplast elastomere Eigenschaften aufweist. Als Thermoplast wird Polyisobutylen, als Fasern werden kurzgeschnittene homopolymere Polyacrylfasern mit einer Dicke von etwa 1,5 dtex mit einer mittleren Länge von etwa 4 mm und als Lösungsmittel werden aliphatische Kohlenwasserstoffe empfohlen.

## Beschreibung

Die Erfindung betrifft eine Paste zur wasserdichten Beschichtung von Oberflächen, wobei die Paste zumindest in einem Lösungsmittel gelöstes thermoplastisches Material aufweist.

Derartige Pasten sind zur Beschichtung glatter Oberflächen durch Aufstreichen und nachfolgendes Trocknen infolge Verdunstung des Lösungsmittels bekannt. Derartige Pasten fließen auf rauhen oder porösen Untergründen in die Vertiefungen, so daß sehr viel Material benötigt wird. Sind größere Löcher, beispielsweise infolge von Lochfraß vorhanden, so können diese nicht abgedichtet werden, weil die Paste in diese Löcher hineinfließt und abtropft.

Der Erfindung liegt die Aufgabe zugrunde, eine Paste der eingangs geschilderten Art zu schaffen, die auf sehr rauhe und perforierte Oberflächen wie Gitter auf tragbar ist und dabei Durchbrüche bzw. Löcher mit bis zu mehreren Millimetern Breite filmbildend überdeckt. Weiterhin soll der nach dem Trocknen gebildete Film insbesondere auf der Witterung ausgesetzten Oberflächen den sommerlichen und winterlichen Temperaturen widerstehen und eine hohe Temperaturwechselbeständigkeit aufweisen.

Erfindungsgemäß wird diese Aufgabe dadurch gelöst, daß die Paste zusätzlich Fasern enthält und daß der Thermoplast elastomere Eigenschaften aufweist.

Die Zugabe von Fasern bewirkt, daß diese beim Aufstreichen eine Art feinmaschiges Vlies bilden, welches Löcher überspannt und die Paste kapillar auf saugt und dadurch das Abtropfen des im Lösungsmittel gelösten Thermoplasten verhindert. Nach dem Trocknen bildet der Thermoplast mit den Fasern einen stabilen elastischen Film, der Dehnungen infolge unterschiedlicher Ausdehnungskoeffizienten von Untergrund und Film bei Temperaturschwankungen elastisch aufnimmt. Dieser Film ist gegen mechanische Angriffe, beispielsweise durch Steinschlag, besonders resistent.

Vorzugsweise werden als Fasern kurzgeschnittene homopolymere ## Polyacrylfasern verwendet.

Besonders geeignet sind dünne Fasern mit einer längenbezogenen Masse von etwa 1,5 dtex (1 tex = 1 g/km).

Damit einerseits die Streichfähigkeit der Paste gegeben ist und andererseits eine Vliesbildung möglich ist, beträgt die mittlere Länge der Fasern vorzugsweise etwa 4 mm. Es versteht sich, daß auch kürzere Fasern verwendet werden können, wenn nur kleine Löcher von der Paste filmbildend überbrückt werden sollen.

Eine derartige Fasern enthaltende Paste eignet sich hervorragend zur Abdichtung bei Reparatur- und Neuarbeiten im Dachbereich von Bauwerken.

Als Thermoplast mit elastomeren Eigenschaften ist Polyisobutylen besonders geeignet, vorzugsweise mit einem Staudinger-Index im Bereich von 170 bis 240 cm³/g. Die Elastizität des nach dem Trocknen gebildeten Films wird gesteigert, wenn die Paste außerdem Polyisobutylen mit einem Staudinger-Index im Bereich von 110 bis 150 cm³/g enthält. Eine bevorzugte Paste enthält pro 100 Massenteile Polyisobutylen mit einem Staudinger-Index im Bereich von 170 bis 240 cm³/g zwischen 30 und 60 Massenteile Polyisobutylen mit einem Staudinger-Index im Bereich von 110 bis 150 cm³/g.

Kaltfluß des Films im Laufe der Zeit wird verhindert durch Zugabe eines aliphatischen Polymers wie Polyethylen oder Copolymere des Ethylens, beispielsweise Ethylenvinylacetat (EVA).

Die Witterungsbeständigkeit des Films wird erhöht, wenn die Paste pro 100 Massenteile Thermoplast etwa 1 bis 6 Massenteile eines UV-Absorbers enthält, wie beispielsweise Ruß, feinteiliges Titandioxid, oder Mischungen verschiedener UV-Absorber.

Die Langzeitbeständigkeit des Films wird erhöht, wenn die Paste pro 100 Massenteile Thermoplast etwa 0,2 bis 2 Massenteile eines Antioxidans enthält. Als Antioxidantien eignen sich gebräuchliche Radikalfänger wie mehrfach alkylierte Phenolverbindungen, substituierte Naphtylamin-Verbindungen oder dergleichen.

Die Farbe des getrockneten Films kann durch geeignete Pignente dem Verwendungszweck angepaßt werden, beispielsweise der Farbe von Dachziegeln oder Betondachsteinen, wenn die Abdichtung des Übergangs von einem Dach zu einem aus der Dachfläche herausragende Bauteil erfolgen soll wie zu einer angrenzenden Wand oder zu einem Schornstein. Auch für Reparaturarbeiten beispielsweise am First oder am Grat eines Daches ist eine Anpassung der Farbe an die Umgebung vorteilhaft. Besonders geeignet sind lichtstabile mineralische Pigmente insbesondere Eisenoxid- und/oder Titandioxid-Pigmente.

Die Streichbarkeit der Paste kann durch Zusatz von Füllstoffen beeinflußt werden, beispielsweise durch Zugabe von Kreide, Aluminiumsilikat, Kieselgel, Diatomeenerde, Schiefermehl, Kaolin, Talkum oder dergleichen. Bevorzugt wird als Füllstoff gecoatete feinteilige amorphe Kreide.

Die Paste trocknet schnell aus, wenn als Lösungmittel aliphatische Kohlenwasserstoffe eingesetzt werden. Besonders geeignet ist als Lösungsmittel ein Gemisch aus Benzin mit einem Siedebereich von 80°C bis 110°C und Benzin mit einem Siedebereich von 145°C bis 200°C.

Eine bevorzugte Ausführungsform der Paste weist auf:
- 7,5 Massenprozent: Polyisobutylen mit Staudinger-Index im Bereich von 170 bis 240 cm³/g
- 3,5 Massenprozent: Polyisobutylen mit Staudinger-Index im Bereich von 110 bis 150 cm³/g
- 2,0 Massenprozent: Polyethylen
- 3,5 Massenprozent: Eisenoxidpigmente
- 0,1 Massenprozent: UV-Absorber
- 0,1 Massenprozent: Antioxidans
- 22,8 Massenprozent: Füllstoffe
- 1,5 Massenprozent: Polyacrylfasern 1,5 dtex / 4 mm
- 59,0 Massenprozent: Benzinmischung mit einem Siedebereich von 80°C bis 110°C und von 145°C bis 200°C

## Patentansprüche

1. Paste zur wasserdichten Beschichtung von Oberflächen, wobei die Paste zumindest in einem Lösungsmittel gelöstes thermoplastisches Material aufweist,
**dadurch gekennzeichnet,**
daß die Paste zusätzlich Fasern enthält und daß der Thermoplast elastomere Eigenschaften aufweist.

2. Paste nach Anspruch 1,
**dadurch gekennzeichnet,**
daß die Fasern kurzgeschnittene homopolymere Polyacrylfasern sind.

3. Paste nach Anspruch 1 oder 2,
**dadurch gekennzeichnet,**
daß die Fasern eine längenbezogene Masse von etwa 1,5 dtex aufweisen.

4. Paste nach einem der Ansprüche 1 bis 3,
**dadurch gekennzeichnet,**
daß mittlere Länge der Fasern etwa 4 mm beträgt.

5. Paste nach einem der Ansprüche 1 bis 4,
**dadurch gekennzeichnet,**
daß der Thermoplast Polyisobutylen ist.

6. Paste nach Anspruch 5,
**dadurch gekennzeichnet,**
daß der Staudinger-Index des Polyisobutylens im Bereich von 170 bis 240 cm³/g liegt.

7. Paste nach Anspruch 5,
**dadurch gekennzeichnet,**
daß der Thermoplast eine Mischung aus Polyisobutylen mit einem Staudinger-Index im Bereich von 170 bis 240 cm³/g und Polyisobutylen mit einem Staudinger-Index im Bereich von 110 bis 150 cm³/g ist.

8. Paste nach einem der Ansprüche 1 bis 7,
**dadurch gekennzeichnet,**
daß diese ein aliphatisches Polymer enthält.

9. Paste nach einem der Ansprüche 1 bis 8,
**dadurch gekennzeichnet,**
daß diese pro 100 Massenteile Thermoplast etwa 1 bis 4 Massenteile eines UV-Absorbers enthält.

10. Paste nach einem der Ansprüche 1 bis 9,
**dadurch gekennzeichnet,**
daß diese pro 100 Massenteile Thermoplast etwa 1 bis 2 Massenteile eines Antioxidans enthält.

11. Paste nach einem der Ansprüche 1 bis 10,
**dadurch gekennzeichnet,**
daß diese Farbpigmente enthält.

12. Paste nach einem der Ansprüche 1 bis 11,
**dadurch gekennzeichnet,**
daß diese Füllstoffe enthält.

13. Paste nach einem der Ansprüche 1 bis 12,
**dadurch gekennzeichnet,**
daß das Lösungsmittel aliphatische Kohlenwasserstoffe enthält.

14. Paste nach Anspruch 13,
**dadurch gekennzeichnet,**
daß das Lösungsmittel ein Gemisch ist aus Benzin mit einem Siedebereich von 80°C bis 110°C und Benzin mit einem Siedebereich von 145°C bis 200°C.

15. Paste nach einem oder mehreren der Ansprüche 1 bis 14,
**dadurch gekennzeichnet,**
daß diese aufweist:
7,5 Massenprozent Polyisobutylen, Staudinger-Index im Bereich von 170 bis 240 cm³/g
3,5 Massenprozent Polyisobutylen, Staudinger-Index im Bereich von 110 bis 150 cm³/g
2,0 Massenprozent Polyethylen
3,5 Massenprozent Eisenoxidpigmente
0,1 Massenprozent UV-Absorber
0,1 Massenprozent Antioxidans
22,8 Massenprozent Füllstoffe
1,5 Massenprozent Polyacrylfasern, 1,5 dtex / 4 mm
59,0 Massenprozent Benzinmischung mit einem Siedebereich von 80°C bis 110°C und von 145°C bis 200°C
